# EUROPEAN PATENT APPLICATION

(11) **EP 4 095 036 A1**
(43) Date of publication of application: **30.11.2022**
(21) Application number: 21175766.1
(22) Date of filing: 25.05.2021
(51) Int. Cl.: B64C 39/02, G08G 5/00, G08G 5/04, G05D 1/10, G05D 1/00, B66B 19/00

(54) **AN AUTONOMOUS UNMANNED AERIAL VEHICLE FOR INSPECTION OF A VERTICAL BUILDING PASSAGEWAY**

(71) Applicant: VERTLINER Private Company, 15341 Athens (GR)
(72) Inventor: Striligkas, Michail, 54250 Thessaloniki (GR)
(74) Representative: Murgitroyd & Company

(57) **Abstract**

The present invention provides a system and a method for inspecting a vertical building passageway (100), such as an elevator shaft, using an autonomous unmanned aerial vehicle (200). The UAV (200) is provided with a sensor module configured to collect data and scan the surrounding environment, and a processing unit (297), which is configured, based on the collected data, to guide the UAV from a starting position to the internal space of the building passageway (100). Upon entering the internal space, the processing unit (297) is configured to compute a flight path within the internal space, based on data collected from the sensor module, and guide the UAV (200) along the computed flight path to perform the inspection, the processing unit (297) is configured to collect data generated from sensor modules at predetermined time steps along the flight path. Upon completing the building passageway (100) inspection, the processing unit (297) is configured to guide the UAV (200) back to the starting position.

## Description

### Field

The present invention relates an autonomous unmanned aerial vehicle and a method for the inspection of a vertical building passageway, such as an elevator shaft.

### Background

Inspecting the dimensions of internal vertical building passageways, such as an shaft of an elevator, is an essential task that should be carried during the construction of the building. In general, elevators, also referred to as lifts, are configured to transport goods and passengers between different levels of a building. The elevator of a building is enclosed by an elevator shaft, which is typically square or rectangular, that rises vertically through the building and often terminate above roof level. Inspection of elevator shafts is primary carried out manually using known techniques such as laser devices or measurement strips, which lack accuracy and coverage. This is because access to the internal space of an elevator shaft is difficult, leading to estimations of the dimensions. Inaccuracies in the construction of the building passageway may compromise safety and lead to delays and extra cost.

WO2018041815A1 discloses a method and a system for measuring the dimensions of an elevator shaft. The method and the proposed system work by securing, via a rope, a measurement device to a winch positioned at the top surface of the elevator shaft. The measurement system is manually lowered to the bottom of the elevator shaft, and the internal space dimensions are measured. However, the proposed system has a disadvantage in that the measurement unit is suspended via a rope and thereby would swing from side to side as it is lowered and raised in the elevator shaft, risking collision of the measurement unit to the walls of the elevator shaft. Therefore, it is left up to the operator to ensure the safe deployment of the measurement device. Furthermore, the higher the elevator shaft, the longer the rope that needs to be used, which would further increase the instability of the measurement system as it is moved vertically along the elevator shaft.

Therefore, there is a need to provide a system and a method for autonomously measuring the internal dimensions of a vertical building passageway, such as an elevator shaft, which can transmit the data generated to a central computer platform for further processing.

### Summary of the invention

The aim of the present invention is to provide an autonomous unmanned aerial vehicle (UAV) and a corresponding method for inspecting the internal dimensions of a building passageway.

A further aim of the present invention is to provide a central computer platform for processing the data collected from the UAV for a display to the user.

The aims of the present invention are achieved with the systems and method of the independent claims, while preferred embodiments are described as independent claims.

According to a first aspect of the present invention, an autonomous unmanned aerial vehicle, UAV, is provided for the inspection of a vertical building passageway comprising at least one opening and an internal space defined by corresponding opposing walls, the UAV comprising:
An autonomous unmanned aerial vehicle, UAV, for the inspection of a vertical building passageway comprising at least one opening and an internal space defined by corresponding opposing walls, the UAV comprising:
a frame comprising:
a sensor module configured to collect data associated with a set of parameters associated with the surrounding environment and/or the UAV position and operation, the sensor module is configured to generate, based on the collected data, a representative three-dimensional scan dataset comprising spatial measurements of the surrounding environment characteristics, wherein the set of parameters comprising any one of or a combination of dimensions of the building passageway, position of the UAV, speed of the UAV, position of the UAV in relation to a target, obstacle detection, orientation of the UAV, verticality of the building, and gravity vector in the geographic location of the building passageway; and
   a processing unit configured to collect the data generated from the sensor module, which data is communicated to a remote central computing platform for display to a user;
wherein the processing unit is configured, upon receiving an activation signal and with the UAV in a starting position, to scan the surrounding environment and collect data from the sensor module, based on the data collected, the processing unit is configured to locate an opening of the building passageway and to guide the UAV through the opening to enter the internal space of the building passageway, upon entering the internal space, the processing unit is configured to compute a flight path within the internal space, based on data collected from the sensor module, and guide the UAV along the computed flight path to perform the inspection, the processing unit is configured to collect data generated from sensor modules at predetermined time steps along the flight path; and
wherein the processing unit is configured, upon completing the building passageway inspection, to guide the UAV back to the starting position.

It has been found that the autonomous UAV of the present invention is capable of operating autonomously for the inspection of the internal dimensions of a vertical building passageway, such as an elevator shaft. In particular, the UAV is provided with a sensor module which is operated by a processing unit to scan and collect data from the surrounding environment. The sensor module is configured to collect data associated with a set of parameters associated with the surrounding environment and/or the UAV position and operation such as the dimensions of the building passageway e.g. width, depth, height, and the like, position of the UAV, speed of the UAV, position of the UAV in relation to a target, obstacle detection, orientation of the UAV, verticality of the building passageway, and gravity vector in the geographical location of the building passageway. It should be noted that the sensor module may be configured to monitor any other parameters that are required for the inspection of the vertical building passageway.

Based on the data received from the sensor module , the processing unit calculates the positioning of the UAV and guides the UAV through the internal space of the building passageway for the inspection of its internal dimensions. During the operation of the UAV, the processing unit is configured to collect and process the data generated from the sensor module at predetermined time steps. Each time step may be associated with a grid of the internal space of the building passageway. The processing unit is configured to collect and store the data generated from the sensor module at each time step. The collected data may be processed at the processing unit and additional information may be added to the collected data. The data collected from the sensor module is in the form of a three-dimensional (3D) point cloud. Once the inspection of the building passageway is complete, the processing unit guides the UAV back to the starting position. The processing unit is configured to communicate the data collected to a central computer platform, e.g. via a wireless or wired communication network. The exchange of data to and from the central computing platform may be facilitated using a communication module. The processing unit may be preloaded with an inspection route identifying the tasks to be performed during the inspection of the building passageway. The sensor module may be configured to collect data associated with a set of parameters such as UAV speed, UAV position, UAV proximity to objects such as the wall of the building passageway or obstacles, UAV rotation and orientation, UAV angle, dimensions of the building passageway, and the like. The sensor module is configured to generate a scan dataset that is representative of the characteristics of the surrounding environment. Upon activation, the processing unit is configured to calculate the distance and other parameters from the opening and accordingly calculate a flight path using the data collected from the sensor module. Similarly, once the UAV is positioned inside the building passageway, the processing unit calculates a flight path along the desired direction, based on the data collected from the sensor module.

According to embodiments of the present invention, the processing unit is configured to maintain the UAV at a predetermined distance from the walls of the building passageway based on the data collected from the sensor module.

According to embodiments of the present invention, upon guiding the UAV into the internal space of the building passageway, the processing unit is configured to perform a set of spatial measurements by means of the sensor module to determine the width and depth of the internal space, the processing unit, based on the data collected from the spatial measurements, is configured to position the UAV in the centre of the internal space so as to maintain a predetermined distance from the walls along the preselected path.

To ensure the safe operation of the UAV within the internal space of the building passageway, the processing unit uses the data collected from the sensor module to determine distances from the walls of the building passageway. The processing unit, based on the distances measured, is configured to position the UAV, preferably at the centre of the internal space and at a safe distance from the walls. The processing unit is configured to maintain the position of the UAV as it moves along the preselected path within the building passageway, thereby ensuring the safe operation of the UAV and accurate inspection of the internal space of the building passageway.

According to embodiments of the present invention, the sensor module comprises a visual Inertial Odometry, VIO, camera configured to collect localisation data of the UAV.

According to embodiments of the present invention, the sensor module comprises a depth camera to collect depth and distance data from a target, and Light Detection and Ranging, LiDaR, module configured to scan the surrounding and measure the distance, elevation and contours of areas of the building passageway.

The sensor module comprises an inertia measurement unit based on acceleration meters, Visual Inertial Odometry (VIO) camera for localisation, an RGB-Depth camera for structural data acquisition and object detection, and a LiDaR module to scan the surrounding and measure the distance, elevation and contours of areas of the building passageway. The sensor module collects information that is necessary to ensure the safe and autonomous operation and allow the processing unit to assess the UAV operation accurately, including the UAV three-dimensional position, linear and angular speed as well as its orientation by measuring the angles of inclination of the UAV during a three-axis rotation. The measurements are taken with respect to a global reference point, which is associated with the UAV starting position. For example, the global reference point may define the position (x,y,z) = (0,0,0) of the UAV at the starting position along with the unit vectors which define the reference directions along which the orientation is calculated.

According to embodiments of the present invention, the processing unit is configured to process the data received from the depth camera and/or the LiDaR to determine obstacles along the path of the UAV.

According to embodiments of the present invention, wherein upon an obstacle is detected, the processing unit is configured to adjust the path of the UAV to avoid the obstacle.

The processing unit uses the information collected from the sensor module to detect objects along the flight path of the UAV, thereby ensuring its safe operation and avoiding collisions. For example, the processing unit may use the data collected from the depth camera, among others, to determine the characteristics of the obstacle and the grid it occupies. Based on the data collected, the processing unit is configured to adjust the flight path of the UAV to avoid the obstacle and continue its operations. If the obstacle blocks the entire path of the UAV, the processing unit may guide the UAV back to the starting point and/or issue a notification to an operator.

According to embodiments of the present invention, the sensor module comprises an altitude sensor unit configured to measure the position of the UAV in relation to a reference bottom level of the building passageway, and an Inertia Measurement Unit, IMU, sensor.

According to embodiments of the present invention, the altitude sensor unit comprises a laser unit and/or a sonar altimeter unit.

The sensor module may further be provided with an altitude sensor, which is configured to measure the position of the UAV from a bottom level and a top level of the building passageway. As such, and especially for vertical building passageways, the UAV can be guided close to the bottom and top levels of the building passageway, thereby extending the inspection coverage in comparison to known solutions.

According to embodiments of the present invention, the vertical building passageway is an elevator shaft. According to embodiments of the present invention, the processing unit is configured to perform the building passageway inspection by guiding the UAV towards successively calculated target points defined with respect to a global reference point along the UAV computed flight path, the global reference point being associated with the starting position of the UAV.

The processing unit is configured to perform the inspection of the building passageway by guiding the UAV towards successive target points positioned between a predetermined threshold distance from a bottom level and a top level of the building passageway, the target points being successively calculated based on data collected from the sensor module such that an inspection is carried out substantially along the entire internal space of the building passageway, upon completing the inspection the processing unit is configured to guide the UAV towards the entrance opening, where the UAV exits the internal space of the building passageway and is guided back to the starting position.

The processing unit of the UAV is configured to process the data collected from the sensor module and accordingly compute a flight path for the UAV. For example, the processing unit may use the data collected by the depth camera to calculate a target point, or target location, within the internal space of the building passageway. The processing unit is configured to guide the UAV to the calculated target point, and upon arrival at the calculated target point calculate the next target point. As such, the processing unit guides the UAV through successive target points, until a desired portion of the internal space of the building passage is scanned. The desired portion of the internal space is defined between a bottom reference point and top reference point of the building passageway. The bottom and top reference points may be positioned at a predetermined threshold distance from the top level and bottom level of the building passageway. For example, processing unit is configured, upon positioning the UAV in the internal space, to guide the UAV first towards a bottom level of the building passageway, upon reaching a predetermined distance from the bottom level, the processing unit is configured to guide the UAV towards a top level of the building passageway, and upon reaching a predetermined distance from the top level, the processing unit is configured to guide the UAV towards the entrance opening, where the UAV exits the internal space of the building passageway and is guided back to the starting position.

The processing unit uses the data collected from the sensor module to guide the UAV within the building passageway, such that its internal space and surrounding walls can be inspected with greater accuracy along its entire length. During the inspection and with the UAV positioned in the internal space, the processing unit may guide the UAV first towards a first target point, as previously described, e.g. towards the bottom level of the building passageway. According to embodiments of the present invention, the processing unit is configured to collect and store the data obtained from the sensor module at each time step in the form of a set of three-dimensional, 3D, points expressed with respect to a global reference point associated with the starting position of the UAV, the sets of 3D points collected during inspection of the building passageway are inserted into a global 3D point cloud, which global point cloud is communicated to the central computer platform.

During the operation of the UAV, the data collected from the sensor module at each time step are collected and processed by the processing unit. The processing unit stores the data collected from each time step in the form of a set of 3D points. Each set of 3D points corresponds to a section of the building passageway, which is added to a global 3D point cloud representing the entire building passageway. The processing unit communicates the global 3D point cloud and other information, such as the geographical location, to the central computer platform, where the data is processed and graphically represented to a user. The processing unit may be configured to flag measurement data exceeding a certain threshold. For example, if the characteristics of a wall section are over a predetermined threshold, e.g. vertical wall angle is over or below a predetermined threshold, the processing unit is configured to flag the corresponding measurement data in the dataset, e.g. by adding metadata.

According to a second aspect of the present invention, a central computer platform is provided configured for processing inspection data collected from an autonomous UAV according to embodiments of the first aspect during inspection of a building passageway, the central computer platform comprising:
a communication module configured to receive data from a UAV according to embodiments of the first aspect during inspection of a building passageway;
a processing module configured to process the collected data to compute a set of structural characteristics of the building passageway, and based on the computed values of the structural characteristics and the collected data to generate an as-built model of the building passageway; and
   a graphical user interface configured to display a graphical representation of the as-built model of the building passageway.

The present invention further provides a central computer platform that is configured to receive and process the data collected from the UAV during the inspection of the internal space of the building passageway. The central computing platform may be communicatively coupled to the UAV via a communication module of the processing unit. The processing unit may be configured to transmit the collected scan data, which is then processed at the central computer platform before being graphically displayed to a user. The central computer platform may be configured to superimpose the collected scan data to a reference virtual model of the building passageway and accordingly highlight sections of the reference model with a discrepancy between the measured and reference data. As such, the user is able to quickly identify areas that require special attention and accordingly initiate, if required, a set of corrective actions, such as repairs or ordering adjustments to the equipment that would operate within the building passageway, such as adjustments to the elevator shaft.

According to a third aspect of the present invention, a method for operating a UAV according to embodiments of the first aspect is provided for the inspection of a building passageway, the method comprises the steps of:
positioning the UAV in a starting position;
   collecting data, by the sensor module, associated with a set of parameters associated with the surrounding environment and/or the UAV position and operation, the set of parameters comprising any one of or a combination of dimensions of the building passageway, position of the UAV, speed of the UAV, position of the UAV in relation to a target, obstacle detection, orientation of the UAV, verticality of the building passageway, and gravity vector in the geographic location of the building passageway;
   generating, based on the collected data, a representative three-dimensional scan dataset comprising spatial measurements of the surrounding environment characteristics;
   processing, by a processing unit, the collected data and scan data generated by the sensor module to determine an opening of the building passageway;
   calculating, based on the scan dataset collected, a UAV flight path towards the detected opening;
   guiding, by the processing unit, the UAV through the opening and into an internal space of the building passageway;
   performing, by the sensor module, a set of spatial measurements to determine distances from the walls of the building passageway;
   positioning, by the processing unit, the UAV at the centre of the internal space and at a predetermined distance from the walls of the building passageway;
inspecting the internal space of the building passageway by performing the steps of :
   guiding, by the processing unit, the UAV between successively calculated target points defined with respect to a global reference point along a computed UAV flight path within the building passageway, the global reference point being associated with the starting position of the UAV,
   scanning, by the sensor module, the internal space at predetermined time steps along the UAV flight path,
   collecting, by the processing unit, the scan data collected by the sensor module at each time step;
wherein, upon completing the inspection of the internal space of the building passageway, the processing unit performs the steps of:
   guiding the UAV to the entrance opening;
   calculating a flight path from the entrance opening to the starting position;
   guiding the UAV to the starting position; and
   communicating the scan data collected by the sensor module to a central computing platform.

According to embodiments of the third aspect, the step of guiding the UAV between successively calculated target points comprises the steps of:
calculating a minimum jerk trajectory from a UAV current position to a calculated target point;
obtaining information from an occupancy grid between the UAV current position and the target point along the computed flight path ; and
guiding the UAV from the current position to the target point along the computed flight path.
In general, the present invention offers a range of advantages over existing solution such as:
- accurate inspection of indoor spaces without the need of a GPS signal;
- autonomous mode of operation of the UAV for the inspection of indoor spaces without the need of a GPS signal and without the active participation of an operator;
- the automated and direct mode of data transfer from the autonomous UAV to a central computing platform via a wireless communication interface; and
- the managing, processing, and graphically displaying the collected scan data together with the reference virtual model to a user, thereby ensuring that discrepancies between the measured and reference dimensions are quickly identified.

### Brief Description of the drawings

The following drawings are provided as an example to explain further and describe various aspects of the invention:
Figure 1 shows an exemplified implementation of the system according to embodiments of the present invention.
Figures 2 and 3 shows an exemplified graphical representation of the autonomous unmanned aerial vehicle (UAV) according to embodiments of the present invention.
Figure 4 shows an exemplified method for measuring the dimensions of an elevator shaft according to embodiments of the present invention.

### Detailed Description

The present invention will be illustrated using the exemplified embodiments shown in the figures, which will be described in more detail below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention. Furthermore, while the invention has been described with references to a particular system and/or a method for managing the synchronisation of routing configuration files in a distributed messaging system, it should be understood by those skilled in the art that changes in the form and details may be made to facilitate other types of method and/or systems in related fields without departing from the scope of the invention.

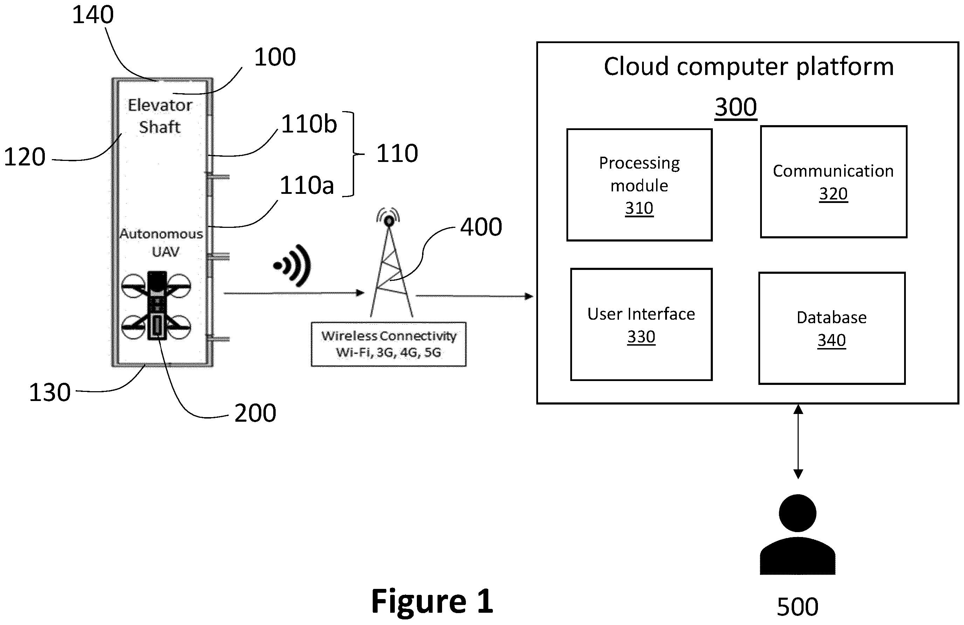

Figure 1 shows an exemplified implementation of an inspection system according to embodiments of the present invention. The inspection system is configured for inspecting the internal spaces of building passageways, such as elevator shafts 100. It should be noted that although the invention would be exemplified using as an example of a building passageway, an elevator shaft, the invention could equally apply to other types of building passageways, such as air vents and the like. As shown, elevator shaft 100 is provided with a plurality of opening 110, which would form the entrance points to the elevator cart. During the elevator shaft construction, an inspection is carried out to ensure that the internal dimensions of the elevator shaft are according to the specified reference design dimensions. According to the present invention, the inspection is carried out by an autonomous unmanned aerial vehicle (UAV) 200, which enters through an opening 110 in the internal space of the shaft 100 and carries out an array of measurements. The internal space of the elevator shaft 100 is defined by the corresponding walls 120.

The measurements collected are transmitted via a communication network 400 to a central cloud computing platform 300, where the measurements and other information transmitted by the UAV 200 is processed and displayed to a user 500. The measurement data collected by the UAV 200 may be in the form of a 3D point cloud representing the elevator shaft. The 3D point cloud may be annotated with other data, such as the speed of the UAV 200, measurement offsets, and the like. The 3D point cloud and any other information transmitted by the UAV 200 is received at the communication module 320 of the cloud computing platform 300. The communication module 320 may store the information received in a database 340. A processing unit 310 may retrieve the transmitted information from the database 340 for processing and analysis. At the processing unit 310, the measurement information may be superimposed with a virtual reference model of the elevator shaft 100, and an offset between the measured dimension of the internal space with the reference dimension of the virtual model may be highlighted. The superimposed measurement information may be displayed on a graphical user interface (GUI) 330, where the user 500 is provided with visual and textual information associated with the inspection carried out by the UAV 200, such as regions of the elevator shaft 100 where the measured dimensions exceed a predetermined threshold from the reference data, the geographical location of the building, images taken at each stage, and the like. The user 500 may further use the cloud platform 300 to initiate corresponding actions. For example, the user 500, based on the information received, may design or alter the dimensions of complementary components for the building passageway. For example, in the case of an elevator shaft 100, the user 500 may use the measured dimensions from the UAV 200 to alter the dimensions of the elevator cart so that it fits the actual dimensions of the shaft. Furthermore, the user 500 may be configured to control via the cloud platform 300 the operation of the UAV 200, e.g. by issuing activation commands and/or requesting specific tasks to be performed during inspection of the elevator shaft 100. The UAV 200 is configured to inspect the internal space of the elevator shaft 100 defined between the bottom level 130 and the top level 140 of the elevator shaft. To avoid collision, the UAV 200 is configured to stop at a predetermined distance from the bottom level 130 and top level 140. As previously explained, the measurements are taken at distinct measurement steps along the elevator shaft 100.

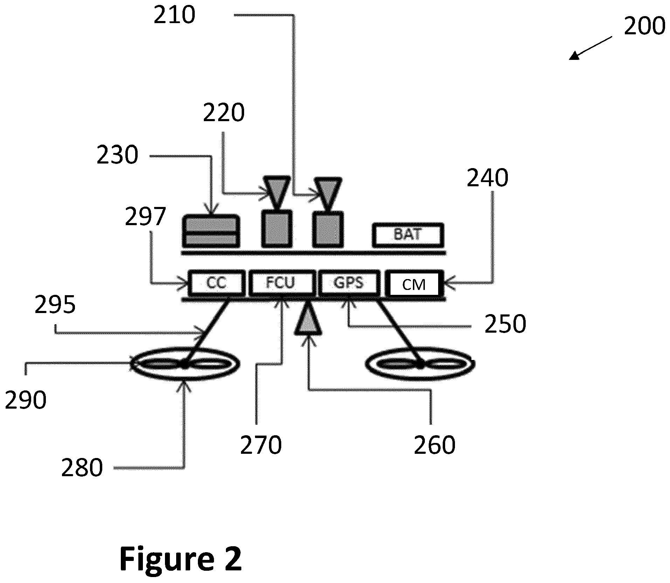

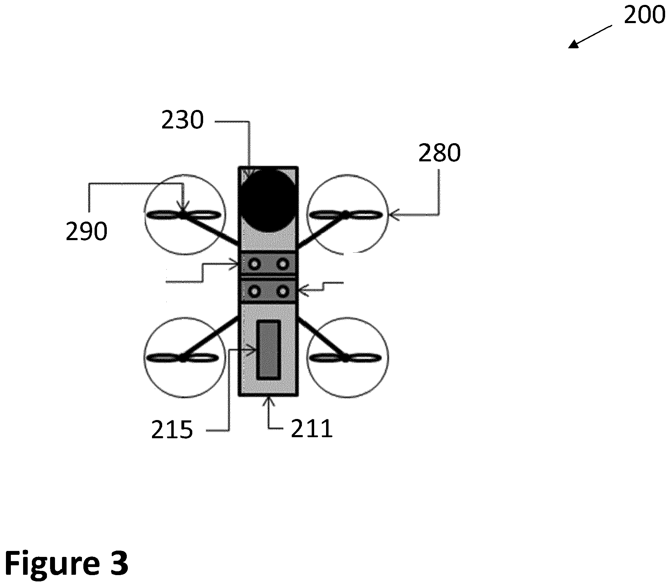

Figures 2 and 3 show an exemplified implementation of an autonomous UAV 200 according to embodiments of the present invention. The autonomous UAV 200 is configured to inspect the internal space of the elevator shaft 100 based on information gathered from a sensor module. As shown in figures 2 and 3, the sensor module comprises a range of sensory instruments and processing systems mounted on a frame 211. Frame 211 is provided with a plurality of propellers 290 arranged around frame 211, coupled to corresponding motors controlled by the processing unit 297. Each propeller 290 may be provided with a guard 280, to protect it from a possible collision with the walls or any other obstacle. The processing unit 297 is an embedded system comprising a plurality of control and processing modules such as a flight control system 270 configured to control the operation of the propeller motors, a communication module 240, a global positioning system (GPS) 250, and the like. The sensor module comprises a range of sensor units such as a 360-degree Lidar module, a Visual Inertial Odometry camera 210, an RGB-depth camera 220, Laser and/or sonar altimeter module 260 to measure distances from objects, a battery 215, and the like.

The UAV device 200 is initially operated by an operator who may be close to the project to be measured. The UAV 200 is positioned at the starting position, and the operator activates the UAV 200. The processing unit 297 is configured upon receiving the activation signal to obtain the geographic coordinates of the UAV 200 via the GPS module 250. As the UAV 200 is operated indoors, the GPS signal may not be available. In this case, the geographic coordinates may be obtained manually by the operator or may be obtained from a mobile network to which the UAV 200 is connected via the communication module 240, e.g. 5G, 4G, Wi-Fi, and the like. The UAV 200 may be positioned at the lowest entry point of the elevator shaft, in case, for example, the building is under construction and access to the other floors is restricted or not possible.

The processing unit 297 is configured to control the position of the UAV 200 based on measurements obtained from the sensor module, such as measurements obtained from an inertia measurement unit based on acceleration data, the Visual Inertial Odometry (VIO) camera 210 for localisation of the UAV 200, the RGB-Depth camera 220 for structural data acquisition and block detection, the LiDaR module 230, and the like. The processing unit 297 collects the data generated from the sensor module and accordingly calculate a flight path for the UAV 200, which is transmitted for execution to a flight control system 270, which is configured to operate the propeller motors. The processing unit 297 may further adjust the flight path based on the data collected, e.g. in the case of a detecting an obstacle and/or to avoid wind gusts and the like.

Once the autonomous UAV 200 is activated by the user, the processing unit 297 performs a set of initialisation checks, and if successfully completed, the processing unit calculates a flight path from the starting position to the location of the entrance opening 110 of the elevator shaft. The flight control system 270 guides the UAV 200 from the starting position to the internal space of the elevator shaft 100 through the opening 110. Once in the internal space, the processing unit 297 conducts a set of spatial measurements using the sensor module to calibrate the position of the UAV 200 in the centre of the shaft in relation to the width and depth of the shaft to ensure the maximum possible safety distance from the walls120. Once the calibration has been completed, the processing unit 297 calculates a flight path for guiding the UAV 200 within the internal space of the shaft 100 to start the inspection of the space while maintaining the UAV at the calibrated position, i.e. at or close to the centre of the shaft 100. For example, the processing unit 297 may first guide the UAV 200 towards the bottom of the shaft 100 while scanning the collecting data from the surrounding environment using the sensor module. When it reaches the bottom level of the well, the processing unit 297 may reverse the course of the UAV 200 to begin inspection of the internal space towards the upper part of the shaft 100. During the inspection of the internal space, processing unit 297 is configured to collect data from the sensor module associated with the width, depth, height and side openings of shaft 100. During the inspection of the internal space, the measurement data collected may be in the form of a 3D Point Cloud, which can be stored in a storage space of the processing unit and/or transmitted over a wireless network to the cloud computing platform 300 (Wi-Fi,3G,4G,5G). The sensor module may further measure the angle of the walls, the vertical distances per floor, the averages of the width and depth of the openings 100 per floor and between the floors, the bottom depth, the path from the bottom height of the first floor to the bottom of the top floor, and the height of the top floor.

The processing unit 297 may process the measurement data collected to determine deviations of the measured dimensions from reference dimensions. The processing unit 297 is configured to identify and label any deviations identified, and the information is included in the information to be transmitted to the cloud computing platform 300.

During the flight, the processing unit 297 may adjust the flight path of the UAV 200, e.g. by performing manoeuvres, to avoid obstacles or compensate for environmental disturbances, such as wind gusts, which may affect the accuracy and reliability of measurements by adding noise. The processing unit 297 may be configured to analyse the quality of the measurement data collected, and if the quality is below a certain threshold, the processing unit 297 is configured to repeat the measurements to correct errors.

The cloud platform 300, as previously indicated, is configured to process the 3D point cloud data and other information transmitted from the UAV 200 to determine the dimensions of the shaft 100. The cloud platform 300 is configured to store the 3D point cloud data in a database 340 together with the geographical location of shaft 100, the time and day of measurement, and other information which is used to generate a unique identifier for the shaft 100. The cloud platform 300 is configured to generate a virtual representation of the shaft 100 based on the information transmitted from the UAV 200, which may be compared and/or superimposed to a reference model of the shaft. As such, deviations between the measured dimensions and reference dimensions may be easily identified and corrected.

The cloud platform 300 may be hosted on one or more computer servers and is accessible by a plurality of users 500, via internet. The information may be displayed and/or shared with other registered users.

The UAV 200 may be further provided with a 3.0-speed Universal Serial Bus(USB) port for computer communication and charging the UAV battery 215.

Frame 211 of the UAV 200 may be made of aluminium or carbon fiber, while the casing mounted on frame 211, which protects the sensor module and processing module, may be made from polymer materials with an IP67 rating for dust and moisture resistance. A special moisture coating may be provided to protect the sensor module and processing unit from moisture.

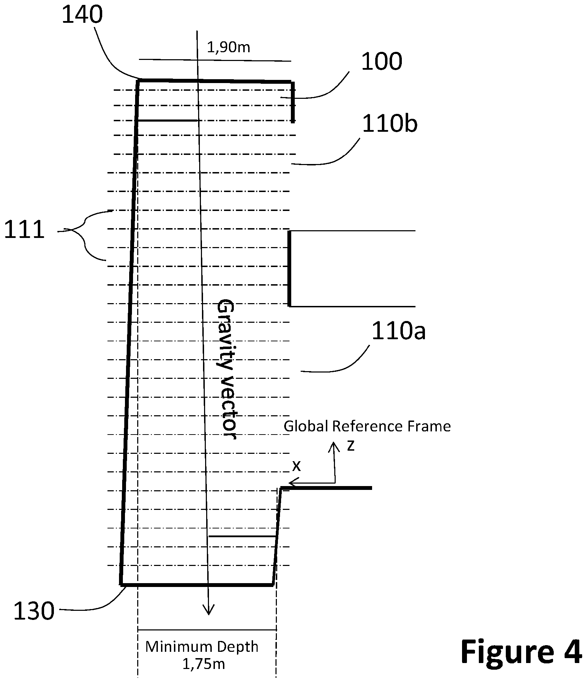

Referring now to Figure 4, for an elevator shaft 100 the structural measurements include specific height measurements, which include the distance between the bottom level 130 of the shaft 100 to the bottom of the first opening 110a, the distance between the bottom level of the last opening 110b to the top level 140 and the distance between the bottom level of the first opening 110a to the bottom level of the last opening 110b. Regarding the depth and width of the shaft 100, the values are calculated with respect to the gravity vector at the geographic location of the building passageway, taking into account the absolute verticality, which is calculated via the acceleration measurement from the IMU sensor of the UAV. In particular, distance measurements are calculated at densely sampled levels 111 within the shaft 100 between the gravity vector and the side walls of the shaft 100, and the minimum values along depth and width direction are stored. This calculation process can be conducted both from the UAV 200 during the flight and the central computer platform 300 in the post-processing procedure. The sampled levels 111 are taken, as previously described, at predetermined time steps.

An exemplified method for operating the UAV 200 of the present invention is provided below. The method comprises the steps of:
- positioning the UAV 200 in a starting position, such as in front of the entrance opening 110 of the elevator shaft 100;
- scanning, by the sensor module and/or the LiDaR module 230, the surrounding environment;
- processing, by a processing unit 297, the scan data generated by the sensor module and/or LiDaR module to determine an opening of the elevator shaft 100;
- calculating, by the processing unit 297 and based on the scan data collected, a flight path to the opening;
- guiding, by the processing unit 297, the UAV 200 through the opening 110 and into an internal space of the elevator shaft 100;
- performing, by the sensor module and/or LiDaR module 230, a set of spatial measurements to determine distances from the walls 120 of the elevator shaft;
- positioning, by the processing unit 297, the UAV 200 at the centre of the internal space and at a predetermined distance from the walls 120 of the elevator shaft 100;
- inspecting the internal space of the elevator shaft 100 by performing the steps of :
   - guiding, by the processing unit 297, the UAV 200 between successively calculated target points, also referred to as goals, defined with respect to a global reference point along a computed flight path within the elevator shaft 100, the flight path being calculated by the processing unit 297 based on data collected by the sensor and/or Lidar module 230 and/or instruction stored in the memory of the processing unit 297 or received by a user,
   - scanning, by the sensor module and LiDaR module 230, the internal space at predetermined time steps along the preselected flight path,
   - collecting, by the processing unit 297, the scan data collected at each time step; wherein, upon completing the inspection of the internal space of the elevator shaft 100, the processing unit 297 performs the steps of:
   - guiding the UAV 200 to the entrance opening 110;
   - calculating a flight path from the entrance opening to the starting position;
   - guiding the UAV 200 to the starting position; and
   - communicating the scan data collected to a central computing platform.

The step of guiding the UAV between successively calculated target points comprises the steps of:
- calculating a minimum jerk trajectory from a UAV current position to the position of calculated target point within the internal space of the building passageway ; and
- obtaining information from an occupancy grid between the UAV current position and the target point along the computed flight path . The current UAV position is calculated with respect to the global reference point, which is associated with the UAV starting position.

The different stages of the UAV 200 operation for performing the inspection of the building passageways are exemplified with the method steps shown below:

### Activation stage:

1. Position the UAV 200 on the g round floor of the elevator shaft 100 facing the shaft opening 110(door).
2. Start all sensors and activate the processing unit 297
3. Obtain the laser value in the forward direction of the 360-degree rotating lidar 230 to determine the distance of the shaft's back wall 120.
4. Obtain the acceleration measurement from an IMU sensor to calculate the verticality of the global reference frame, which is associated with the starting position of the UAV. For example, the global reference point may be the coordinates of the UAV starting position defined as (x,y,z) = (0,0,0) along with the unit vectors which define the reference directions along which the orientation of the UAV. The verticality is determined by calculating the angle between the z-axis of the global reference frame and the gravity vector, calculated by the IMU.
5. The UAV's pose (position and orientation) with respect to a global reference frame is calculated during the flight from the VIO camera 210, from the RGB-Depth Camera 220 and the 360-degree rotating lidar 230 combined with the Laser and/or sonar altimeter 260 and the IMU (Inertial Measurement Unit). This information fusion is contributing not only to the accuracy of the measurements but also to the flight robustness in case of failure of one method due to hardware problem or harsh conditions in the environment (e.g. dust, poor illumination).
6. At predetermined time steps, the information obtained from the RGB-Depth Camera 220, the 360-degree rotating lidar 230, and the Laser and/or sonar altimeter 260 is represented as 3D points expressed with respect to the global reference frame and is inserted into an occupancy grid, which indicates the possibility of a cuboid to be occupied by an obstacle in the 3D space.
7. Arm propeller motors and take off.

### Entering the elevator shaft

8. Calculate at the processing unit 297, a first goal, also referred to as target point, to guide the UAV 200 from the starting position to the entrance position inside the elevator shaft 100
9. Calculate the minimum jerk trajectory towards the first goal, obtaining information from the occupancy grid to avoid possible collisions with obstacles in the space.
10. At each time step, the target position of the calculated trajectory is given as an input to a Model Predictive Controller of the processing module 297, which takes into account the dynamic parameters of the UAV 200, e.g. mass, Inertia, and the like, and the current pose and velocity, see step 5, of the UAV 200 to calculate the reference velocities for the flight controller 270.
11. At each time step the flight controller 270 receives as input the reference velocities from step 10 and takes into account the current velocity, state estimation at step 5, of the UAV 200, in order to calculate the angular velocity of each motor, thereby reducing the velocity error between a reference and the current velocity;

### Descend to the bottom level

12. Calculate at the processing unit 297 the second goal to guide the UAV 200 from the entry position to the lowermost position of the shaft 100.
13. Calculate the minimum jerk trajectory towards the second goal, obtaining information from the occupancy grid to avoid possible collisions with obstacles in the space.
14. Repeat step 10
15. Repeat step 11
16. At each time step, the information obtained from the RGB-Depth Camera 220, and/or the 360-degree rotating lidar 230, and/or the Laser and/or sonar altimeter 260, is represented as 3D points expressed with respect to the global reference frame and is inserted into a global Point Cloud, which will be used for post-processing for the extraction of structural measurements of the elevator shaft 100 in the cloud platform.
17. At each time step, calculate by the processing unit 297 the distance between a reference point in the x,y plane and the side walls 120 to estimate during the flight the structural measurements of the elevator shaft. Calculate the height of each floor.

### Ascend to Top Level

18. Calculate the i-th goal to guide the UAV 200 from the lowermost position gradually to the top-level position in the elevator shaft 100. The i-th intermediate goal is set along the vertical direction, the z-axis of the global reference frame, and within the maximum range of the RGB-Depth Camera 220, so the UAV 200 can have accurate information about the operating environment.
19. Calculate the minimum jerk trajectory towards the i-th goal, obtaining information from the occupancy grid to avoid possible collisions with obstacles in the space.
20. During ascending Repeat step 10
21. During ascending Repeat step 11
22. During ascending Repeat step 16
23. During ascending Repeat step 17
24. When the top-level position is reached, calculate the total height of the shaft 100.

### Descend to Entrance Level

25. Use the same goal points calculated for the ascent to guide the UAV 200 from the top-level position gradually to the entrance position in the elevator shaft 100.
26. During descend Repeat step 10
27. During descend Repeat step 11
28. During descend Repeat step 16
29. During descend Repeat step 17

### Exit shaft

30. Calculate the minimum jerk trajectory from the entrance position to the starting position, obtaining information from the occupancy grid to avoid possible collisions with obstacles in the space.
31. Repeat step 10
32. Repeat step 11
33. When reaching the starting position, the UAV 200 lands.
34. If possible, transmit the structural measurements and the Point Cloud data through wireless connectivity networks to the Cloud Platform 300.

## Claims

1. An autonomous unmanned aerial vehicle, UAV, (200) for the inspection of a vertical building passageway (100) comprising at least one opening (110a, 110b)) and an internal space defined by corresponding opposing walls (110), the UAV comprising:
a frame (211) comprising:
a sensor module configured to collect data associated with a set of parameters associated with the surrounding environment and/or the UAV (200) position and operation, the sensor module is configured to generate, based on the collected data, a representative three-dimensional scan dataset comprising spatial measurements of the surrounding environment characteristics, wherein the set of parameters comprising any one of or a combination of dimensions of the building passageway, position of the UAV, speed of the UAV, position of the UAV in relation to a target, obstacle detection, orientation of the UAV, verticality of the building passageway, and gravity vector in the geographic location of the building passageway; and
a processing unit (297) configured to collect the data generated from the sensor module, which data is communicated to a remote central computing platform for display to a user;
wherein the processing unit (297) is configured, upon receiving an activation signal and with the UAV (200) in a starting position, to scan the surrounding environment and collect data from the sensor module, based on the data collected, the processing unit (297) is configured to locate an opening (110a, 110b) of the building passageway (100) and to guide the UAV (200) through the opening to enter the internal space of the building passageway (200), upon entering the internal space, the processing unit (297) is configured to compute a flight path within the internal space, based on data collected from the sensor module, and guide the UAV (200) along the computed flight path to perform the inspection, the processing unit (297) is configured to collect data generated from sensor modules at predetermined time steps along the flight path; and
wherein the processing unit is configured, upon completing the building passageway (100) inspection, to guide the UAV (200) back to the starting position.

2. The autonomous unmanned aerial vehicle, UAV, (200) of claim 1, wherein the processing unit (297) is configured to maintain the UAV (200) at a predetermined distance from the walls (110) of the building passageway (100) based on the data collected from the sensor module.

3. The autonomous unmanned aerial vehicle, UAV, (200) of claim 1 or 2, wherein, upon guiding the UAV (200) into the internal space of the building passageway (100), the processing unit (297) is configured to perform a set of spatial measurements by means of the sensor module to determine the width and depth of the internal space, the processing unit (297), based on the data collected from the spatial measurements, is configured to position the UAV (200) in the centre of the internal space so as to maintain a predetermined distance from the walls (110) along the preselected path.

4. The autonomous unmanned aerial vehicle, UAV, (100) of any one of the preceding claims, wherein the sensor module comprises a visual Inertial Odometry, VIO, camera (210) configured to collect localisation data of the UAV (200).

5. The autonomous unmanned aerial vehicle, UAV, (200) of any one of the preceding claims, wherein the sensor module comprises a depth camera (220) to collect depth and distance data from a target, and Light Detection and Ranging, LiDaR, module (230) configured to scan the surrounding and measure the distance, elevation and contours of areas of the building passageway .

6. The autonomous unmanned aerial vehicle, UAV, (200) of claim 5, wherein the processing unit (297) is configured to process the data received from the depth camera (220) and/or the LiDaR (230) to determine obstacles along the path of the UAV (200).

7. The autonomous unmanned aerial vehicle, UAV, (200) of claim 6 wherein upon an obstacle is detected, the processing unit (297) is configured to adjust the path of the UAV (200) to avoid the obstacle.

8. The autonomous unmanned aerial vehicle, UAV, (200) of any one of the preceding claims, wherein the sensor module comprises an altitude sensor unit (260) configured to measure the position of the UAV in relation to a reference bottom level (130) of the building passageway (100), and an Inertia Measurement Unit, IMU, sensor.

9. The autonomous unmanned aerial vehicle, UAV, (200) of claim 8, wherein the altitude sensor unit (260) comprises a laser unit and/or a sonar altimeter unit.

10. The autonomous unmanned aerial vehicle, UAV, (100) of any one of the preceding claims, wherein the processing unit (297) is configured to guide the UAV (200) towards successively calculated target points defined with respect to a global reference frame along the UAV flight path.

11. The autonomous unmanned aerial vehicle, UAV, (100) of claim 10, wherein the successive target points are positioned between a predetermined threshold distance from a ground bottom level (130) and a top level (140) of the building passageway (100).

12. The autonomous unmanned aerial vehicle, UAV, (200) of any one of the preceding claims, wherein the processing unit (297) is configured to collect and store the data obtained from the sensor module at each time step in the form of a set of three-dimensional, 3D, points expressed with respect to a global reference point associated with the starting position of the UAV (200), the sets of 3D points collected during inspection of the building passageway (100) are inserted into a global 3D point cloud, which global point cloud is communicated to the central computer platform.

13. A central computer platform (300) configured for processing inspection data collected from an autonomous UAV (200) according to claims 1 to 12 during inspection of a building passageway, the central computer platform (300) comprising:
a communication module (320) configured to receive data from a UAV (200) according to claims 1 to 12 during inspection of a building passageway (100);
a processing module (310) configured to process the collected data to compute a set of structural characteristics of the building passageway (100), and based on the computed values of the structural characteristics and the collected data to generate an as-built model of the building passageway (100); and
a graphical user interface (330) configured to display a graphical representation of the as-built model of the building passageway (100).

14. A method for operating a UAV (200) according to claims 1 to 12 for the inspection of a building passageway (100), the method comprises the steps of:
positioning the UAV (200) in a starting position;
collecting data, by the sensor module, associated with a set of parameters associated with the surrounding environment and/or the UAV (200) position and operation, the set of parameters comprising any one of or a combination of dimensions of the building passageway, position of the UAV, speed of the UAV, position of the UAV in relation to a target, obstacle detection, orientation of the UAV, verticality of the building passageway, and gravity vector in the geographic location of the building passageway;
generating, based on the collected data, a representative three-dimensional scan dataset comprising spatial measurements of the surrounding environment characteristics;
processing, by a processing unit (297), the collected data and scan data generated by the sensor module to determine an opening (110a, 110b) of the building passageway;
calculating, based on the scan dataset collected, a UAV flight path towards the detected opening;
guiding, by the processing unit (297), the UAV (200) through the opening and into an internal space of the building passageway (100);
performing, by the sensor module, a set of spatial measurements to determine distances from the walls of the building passageway (100);
positioning, by the processing unit (297), the UAV (200) at the centre of the internal space and at a predetermined distance from the walls (110) of the building passageway (100) ;
inspecting the internal space of the building passageway (100) by performing the steps of :
guiding, by the processing unit, the UAV (200) between successively calculated target points defined with respect to a global reference point along a computed UAV flight path within the building passageway (100),
scanning, by the sensor module, the internal space at predetermined time steps along the UAV flight path,
collecting, by the processing unit (297), the scan data collected by the sensor module at each time step;
wherein, upon completing the inspection of the internal space of the building passageway, the processing unit performs the steps of:
guiding the UAV (200) to the entrance opening;
calculating a flight path from the entrance opening to the starting position;
guiding the UAV (200) to the starting position; and
communicating the scan data collected by the sensor module to a central computing platform.

15. The method of claim 14, wherein the step of guiding the UAV between successively calculated target points comprises the steps of:
calculating a minimum jerk trajectory from a UAV current position to a calculated target point ; and
obtaining information from an occupancy grid between the UAV current position and the target point along the computed flight path; and
guiding the UAV from the current position to the target point along the computed flight path.
